# FASCICULE DE BREVET EUROPEEN

(11) **EP 2 232 356 B1**
(45) Date de publication et mention de la délivrance du brevet: **20.06.2012**
(21) Numéro de dépôt: 08867442.9
(22) Date de dépôt: 19.12.2008
(51) Int. Cl.: G06F 3/048

(54) **PROCÉDÉ DE COMMANDE D'UN DISPOSITIF DE COMMANDE À SURFACE TACTILE ET DISPOSITIF DE COMMANDE CORRESPONDANT**
VERFAHREN ZUR STEUERUNG EINES STEUERGERÄTS MIT BERÜHRUNGSFLÄCHE UND ENTSPRECHENDE STEUERVORRICHTUNG
METHOD OF CONTROLLING A TOUCH-SURFACE CONTROL DEVICE AND CORRESPONDING CONTROL DEVICE

(30) Priorité: 20.12.2007 FR 0708912
(43) Date de publication de la demande: 29.09.2010
(73) Titulaire: DAV, 94000 Creteil (FR)
(72) Inventeur: COTTAREL, Bruno, F-74106 Annemasse (FR); DE VAUX BIDON, Florent, F-74106 Annemasse (FR); CHARTRAIN, Cedric, F-74106 Annemasse (FR)
(74) Mandataire: Benoit, Monique
(86) Numéro de dépôt international: PCT/EP2008/068011
(87) Numéro de publication internationale: WO 2009/083493

(56) Documents cités:
- WO-A-2006/066715
- US-A1- 2007 083 325
- US-B1- 6 639 584

## Description

La présente invention concerne un procédé de commande d'un dispositif de commande à surface tactile. L'invention concerne également un dispositif de commande à surface tactile correspondant utilisant notamment des résistances sensibles à la pression (également connu sous le nom de capteur FSR pour « Force Sensing Resistor » en anglais).

L'invention s'applique plus particulièrement à la commande d'un organe électrique ou électronique d'un véhicule automobile telle que la commande d'un écran multimédia ou d'un système de climatisation.

Actuellement, les véhicules automobiles sont de plus en plus équipés avec des systèmes électroniques d'assistance et de confort pour le conducteur et ses passagers.

Les systèmes électroniques sont améliorés constamment et offrent de plus en plus de paramètres de réglage. Ainsi, les systèmes audio comportent maintenant pratiquement tous différents groupes de haut parleurs dont on peut régler la balance gauche/ droite et avant / arrière. Pour les systèmes de climatisation, on a vu récemment apparaître la gestion des réglages des paramètres de la climatisation par zones.

Tous ces systèmes nécessitent des moyens de commande adaptés qui soient ergonomiques et faciles d'utilisation.

Pour faciliter les commandes dans un véhicule automobile et diminuer le nombre de commandes individuelles, des commandes multifonctions associées à un écran d'affichage ont fait leur apparition dans le domaine automobile.

Ces commandes connues ont par exemple la forme d'une manette de commande ou joystick permettant de naviguer dans un menu affiché à l'écran. La sélection d'une fonction choisie se réalise par exemple par un appui sur l'élément de préhension de la commande.

Ces joysticks sont parfois dotés d'un organe rotatif de commande qui permet par exemple d'augmenter ou de diminuer le volume d'un système audio lorsque cette fonction de réglage du volume a été choisie.

Ainsi, avec une seule commande multifonctions, on arrive à commander une multitude de systèmes électroniques et de fonctions dans un véhicule automobile.

On a proposé, plus récemment d'utiliser pour ces commandes, des surfaces tactiles permettant de détecter un appui simple du doigt d'un utilisateur pour déclencher un type particulier d'action ou de commande en fonction de la position de l'appui détecté et/ou du déplacement ultérieur de cet appui sur la surface.

Ces surfaces tactiles utilisent de plus en plus la technologie des résistances sensibles à la pression, qui devancent d'autres technologies équivalentes, comme par exemple des technologies capacitives ou encore optiques, grâce à sa facilité de mise en oeuvre et à sa robustesse.

De tels capteurs sont par exemple connus sous le nom « tablette digitalisante » (dénomination anglaise "Digitizer pad") et on cite comme art antérieur les documents suivants: US 4,810,992, US 5,008,497, FR 2683649 ou encore EP 0 541 102.

Ces capteurs comprennent des couches semi-conductrices prises en sandwich entre par exemple une couche conductrice et une couche résistive. En exerçant une pression sur la couche FSR, sa résistance ohmique diminue, permettant ainsi, par application d'une tension adaptée, de mesurer la pression appliquée et/ou la localisation de l'endroit où la pression est exercée.

Les coordonnées délivrées par le capteur sont ensuite exploitées pour la réalisation de la commande d'une fonction spécifique électrique associée à la zone touchée par le doigt de l'utilisateur.

Pour commander une multitude de systèmes électroniques et de fonctions à partir d'une surface tactile, il est alors nécessaire de détecter la trajectoire de commande du doigt d'un utilisateur pour y associer une commande particulière.

Pour cela, il est notamment prévu des surfaces tactiles dont la forme guide le doigt de l'utilisateur.

Par exemple, on connaît des capteurs à surface tactile présentant une forme de couronne ou une forme en bandes d'arc de cercle ou bien encore en forme de bandes rectilignes.

Par ailleurs, lorsque la surface tactile présente une forme quelconque, on connaît d'autres modules de commande comportant des unités de traitement mettant en oeuvre des algorithmes de calcul de reconnaissance de forme de la trajectoire d'un doigt de commande.

Le document US 6 639 584 divulgue un procédé de commande selon le préambule de la revendication 1.

Cependant, ces fonctions nécessitent une capacité mémoire importante et engendrent de lourds temps de calcul souvent incompatibles avec les contraintes liées à l'industrie automobile.

En effet, les spécifications de coût et d'encombrement nécessitent l'utilisation de petits microcontrôleurs de faible capacité pouvant être par exemple, intégrés dans la console avant d'un véhicule afin de commander les organes électronique ou électrique du véhicule.

Le but de la présente invention est donc de proposer un procédé de commande et un dispositif de commande à surface tactile permettant de commander une multitude de systèmes électroniques et de fonctions adaptés pour des microcontrôleurs de petite capacité et de faible coût.

A cet effet, l'invention a pour objet un procédé de commande d'un dispositif de commande à surface tactile caractérisé en ce qu'il comporte une étape de reconnaissance de forme d'une trajectoire de commande sur une surface tactile parmi au moins deux formes de trajectoire prédéfinies, dans laquelle au cours d'une durée prédéterminée:
- on échantillonne la trajectoire de commande pour déterminer un angle échantillonné de la trajectoire de commande pour chaque période d'échantillonnage,
- on compare un paramètre représentatif de l'évolution d'au moins deux angles échantillonnés à un seuil prédéterminé et, ledit paramètre représentatif est la somme des écarts entre les angles échantillonnés et une moyenne des angles échantillonnés,
- on affecte une forme de trajectoire prédéfinie à la trajectoire de commande en fonction du résultat de la comparaison.
Selon d'autres caractéristiques du procédé de commande :
- on affecte une trajectoire circulaire à la trajectoire de commande lorsque ledit paramètre représentatif est supérieur au seuil prédéterminé et on affecte une trajectoire rectiligne à la trajectoire de commande lorsque ledit paramètre est inférieur ou égal audit seuil,
- les trajectoires circulaires ou rectilignes permettent le paramétrage ou la sélection d'une commande,
- au cours de la durée prédéterminée de l'étape de reconnaissance on détermine en outre une longueur de déplacement de la trajectoire de commande, on compare la longueur de déplacement de la trajectoire de commande à une distance prédéterminée et on affecte une trajectoire stationnaire à la trajectoire de commande si la longueur de déplacement de la trajectoire de commande est inférieure à la distance prédéterminée,
- la trajectoire stationnaire permet une validation ou une sélection de fonction,
- après la comparaison de l'étape de reconnaissance, on affecte la forme de la trajectoire prédéfinie à la trajectoire de commande si la forme de la trajectoire prédéfinie satisfait à un critère de validation supplémentaire,
- le critère de validation supplémentaire est satisfait lorsqu'une force d'appui détectée sur la surface tactile est supérieure à une force prédéfinie,
- la période d'échantillonnage est variable.

L'invention a aussi pour objet un dispositif de commande comportant une surface tactile caractérisé en ce qu'il comporte une unité de traitement pour la mise en oeuvre d'un procédé de commande tel que décrit précédemment.

De préférence, le dispositif de commande est apte à commander les fonctions d'au moins un ensemble d'organes électriques ou électroniques d'un véhicule automobile, tel qu'un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairage d'intérieur, des commandes de réglages d'un siège de véhicule automobile.

D'autres avantages et caractéristiques apparaîtront à la lecture de la description de l'invention, ainsi que des dessins annexés sur lesquels :
- La figure 1 est un exemple d'une surface tactile 1 d'un dispositif de commande,
- la figure 2 est un schéma représentant une trajectoire de commande,
- la figure 3 illustre une évolution d'angle échantillonné au cours du temps pour une trajectoire sensiblement rectiligne,
- la figure 4 illustre une évolution d'angle échantillonné au cours du temps pour une trajectoire sensiblement circulaire et,
- la figure 5 est un organigramme montrant les différentes étapes d'un exemple de procédé de commande.

Sur ces figures, les éléments identiques portent les mêmes numéros de référence. Par souci de clarté, les étapes du procédé de commande sont numérotées à partir de 100.

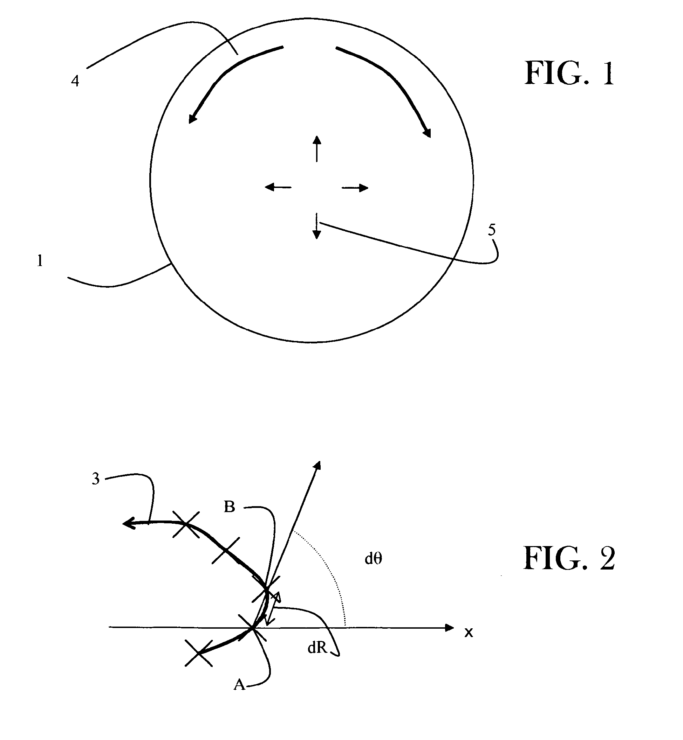

La figure 1 représente une surface tactile 1, notamment destinée à être intégrée dans un dispositif de commande apte à commander les fonctions d'au moins un ensemble d'organes électriques ou électroniques d'un véhicule automobile, tel qu'un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairage d'intérieur, des commandes de réglages d'un siège de véhicule automobile.

Par exemple, dans le cas d'un système audio, une trajectoire de commande circulaire permet de commander le volume et le sens de rotation permet de sélectionner la montée ou la baisse de celui-ci (flèches 4).

Egalement, on peut envisager qu'une trajectoire rectiligne permette le changement de CD ou la sélection d'un titre parmi les titres d'un CD sélectionné (flèches 5).

La surface tactile 1 utilise par exemple des capteurs de résistances sensibles à la pression (également connu sous le nom de capteur FSR pour « Force Sensing Resistor » en anglais) et, est susceptible de fournir un signal à une unité de traitement d'un dispositif de commande, correspondant à une zone d'appui d'un doigt d'un utilisateur appliqué sur la surface tactile 1.

Une zone d'appui correspond à une pression appliquée par un doigt de commande par exemple en modifiant la résistance ohmique du capteur de résistance sensible à la pression de la surface tactile 1.

Par l'application d'une tension adaptée, l'unité de traitement mesure le signal correspondant à la pression appliquée et/ou la localisation de l'endroit où la pression est exercée sur la surface tactile 1.

L'unité de traitement du dispositif de commande, tel qu'un microcontrôleur, par exemple de type 8 bits, comporte une mémoire de programme, pour la mise en oeuvre d'un logiciel apte à exécuter un procédé de détection de commande.

On a représenté sur la figure 2 un exemple de trajectoire de forme quelconque 3.

Le procédé de commande comporte une étape de reconnaissance de forme d'une trajectoire de commande sur une surface tactile parmi au moins deux formes de trajectoire prédéfinies.

Une trajectoire rectiligne, une trajectoire circulaire ou une trajectoire stationnaire sont trois exemples de formes de trajectoire prédéfinies.

Au cours d'une durée prédéterminée dT de l'étape de reconnaissance, on échantillonne d'abord la trajectoire de commande pour déterminer un angle échantillonné dθ de la trajectoire de commande pour chaque période d'échantillonnage Te.

La période d'échantillonnage Te est par exemple une période d'horloge de l'unité de traitement, par exemple de l'ordre de 10 msec.

La durée prédéterminée dT est égale ou supérieure à deux fois la période d'échantillonnage Te.

La période d'échantillonnage Te peut être variable.

Sur la trajectoire de la figure 2, on réalise cinq échantillonnages de l'angle dθ de la trajectoire de commande 3.

L'angle dθ échantillonné correspond à l'angle de la trajectoire de commande relative à un axe (l'axe horizontal X dans cet exemple) entre deux appuis successifs A et B espacés de la période d'échantillonnage Te.

Puis, on compare un paramètre représentatif de l'évolution d'au moins deux angles échantillonnés dθ à un seuil prédéterminé et on affecte une forme de trajectoire prédéfinie à la trajectoire de commande en fonction du résultat de la comparaison.

Ainsi, il est possible de facilement distinguer une trajectoire en arc de cercle d'une droite.

En outre, grâce à ce procédé, la surface tactile peut être parfaitement plane et de forme quelconque.

L'angle échantillonné dθ de la trajectoire de commande 3 peut être obtenu par différents algorithmes de calcul.

Selon un mode de réalisation, on détermine les écarts E entre l'angle échantillonné dθ et une moyenne Mdθ des angles échantillonnés dθ, puis on calcule le paramètre représentatif de l'évolution des angles échantillonnés dθ en faisant la somme des écarts E.

Ainsi, le procédé peut reconnaître facilement une droite d'une courbe même si la trajectoire n'est pas parfaitement circulaire ou parfaitement droite.

On peut également envisager que le paramètre représentatif de l'évolution des angles échantillonnés dθ est l'écart type des angles échantillonnés dθ par rapport à une moyenne des angles échantillonnés Mdθ.

Avantageusement, on affecte une trajectoire circulaire à la trajectoire de commande lorsque le paramètre représentatif est supérieur au seuil prédéterminé et on affecte une trajectoire rectiligne à la trajectoire de commande lorsque le paramètre représentatif est inférieur ou égal au seuil prédéterminé.

Par exemple, le seuil prédéterminée est voisin de 20°.

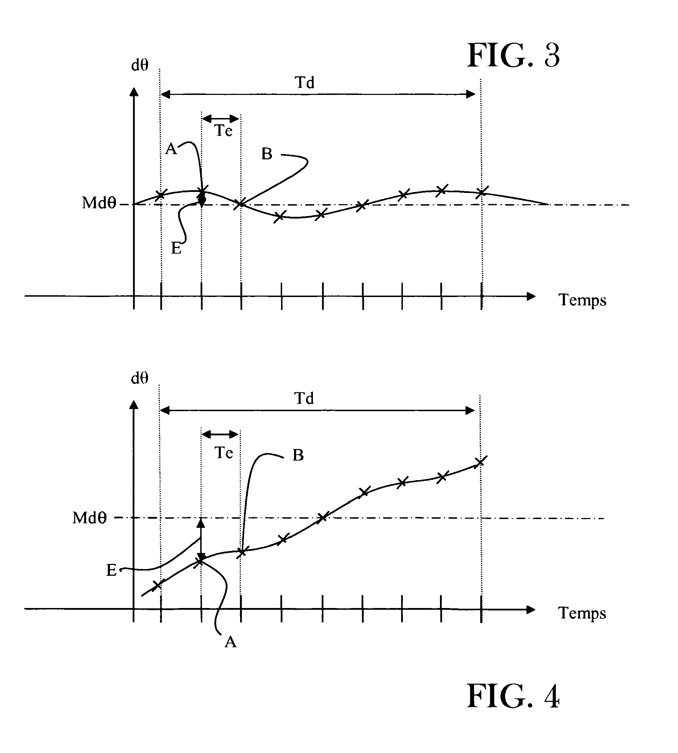

Ainsi, sur la figure 3, on a représenté un exemple d'évolution de neuf angles échantillonnés dθ d'une trajectoire de commande au cours d'une durée prédéterminée Td.

La moyenne des angles échantillonnés Mdθ de la trajectoire de commande est illustrée par la ligne horizontale en pointillés. L'intervalle E correspond à l'écart entre l'angle échantillonné dθ et la moyenne Mdθ.

Comme on peut le constater sur la figure 3, l'évolution des angles échantillonnés dθ est quasiment constante.

Ainsi, la somme des écarts E est quasiment nulle. On peut donc affecter une trajectoire rectiligne à la trajectoire de commande.

Sur la figure 4, on a représenté une deuxième évolution de angles échantillonnés dθ d'une trajectoire de commande au cours d'une durée prédéterminée Td.

Dans cet exemple, la somme des écarts E est plus importante et est supérieure au seuil prédéterminé. On affecte alors une trajectoire circulaire à la trajectoire de commande.

Avantageusement, les trajectoires circulaires ou rectilignes permettent le paramétrage ou la sélection d'une commande.

On peut en outre envisager qu'au cours de la durée prédéterminée dT de l'étape de reconnaissance on détermine en outre une longueur de déplacement de la trajectoire de commande dR entre deux appuis successifs A et B espacés d'une période d'échantillonnage Te (voir figure 2).

Puis on compare la longueur de déplacement de la trajectoire de commande dR à une distance prédéterminée et on affecte une trajectoire stationnaire à la trajectoire de commande si la longueur de déplacement de la trajectoire de commande dR est inférieure à la distance prédéterminée.

Par exemple, la distance prédéterminée est de l'ordre de 4 millimètres.

Avantageusement, la trajectoire stationnaire permet une validation ou une sélection de fonction.

En outre, il est possible également qu'après la comparaison de l'étape de reconnaissance, on affecte la forme de la trajectoire prédéfinie à la trajectoire de commande seulement si la forme de la trajectoire prédéfinie satisfait à un critère de validation supplémentaire.

Le critère de validation supplémentaire est satisfait par exemple lorsqu'une force d'appui détectée sur la surface tactile est supérieure à une force prédéfinie.

Selon un autre exemple, le critère de validation est satisfait lorsque la trajectoire prédéfinie est identique à la trajectoire de commande affectée au moins au cours de l'étape de reconnaissance précédente.

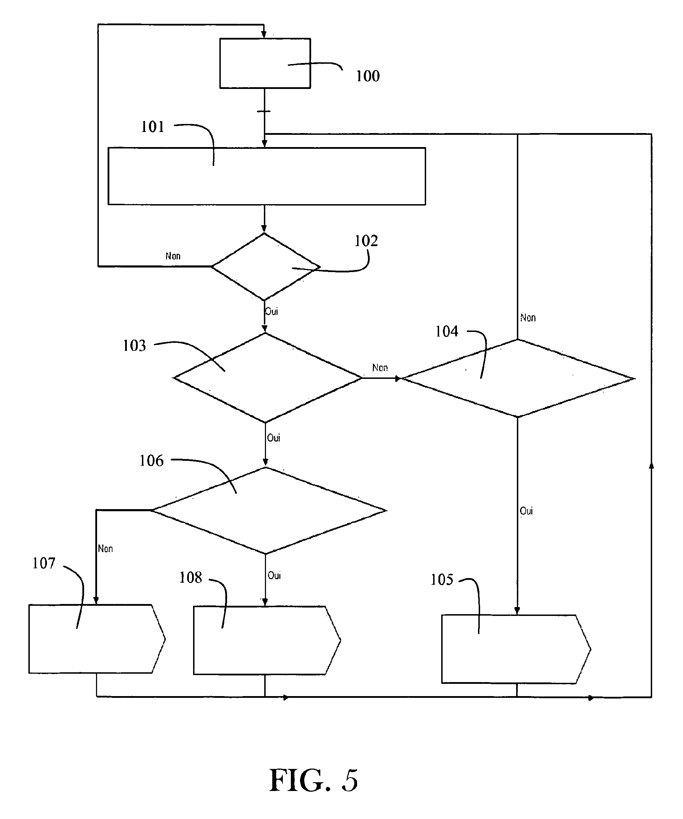

La figure 5 illustre un exemple de procédé de commande.

Au cours d'une première étape 100, on attend que le dispositif de commande détecte un appui sur la surface tactile 1.

Lorsqu'un appui est détecté, on échantillonne la trajectoire de commande pour déterminer un angle échantillonné dθ de la trajectoire de commande pour chaque période d'échantillonnage Te au cours d'une durée prédéterminée dT (étape 101).

On détermine également une longueur de déplacement de la trajectoire de commande dR.

A la fin de la durée prédéterminée dT, si l'on ne détecte plus d'appui, alors le procédé retourne à l'étape initiale 100 d'attente d'un appui.

Si un appui est détecté jusqu'à la fin de la durée prédéterminée dT, alors on compare la longueur de déplacement de la trajectoire de commande dR à une distance prédéterminée 103.

Si la longueur de déplacement de la trajectoire de commande dR est inférieure à la distance prédéterminée alors on détermine si le temps de détection a été suffisant (étape 104), par exemple, si le temps de détection a été supérieur à 500 msec.

Si le temps de détection a été inférieur à ce temps minimal de détection, alors on retourne à l'étape 101 et on attend la détection d'un nouveau déplacement.

Si le temps de détection est supérieur au temps minimal de détection, alors on affecte une trajectoire stationnaire à la trajectoire de commande (étape 105) et on réitère le procédé en retournant à l'étape 101 d'attente d'un déplacement.

Si en revanche, la longueur de déplacement de la trajectoire de commande dR est supérieure à la distance prédéterminée, alors on compare un paramètre représentatif de l'évolution des angles échantillonnés dθ au cours de la durée prédéterminée dT, à un seuil prédéterminé.

Si le paramètre est inférieur ou égal au seuil alors on affecte une trajectoire rectiligne à la trajectoire de commande (étape 107) et on réitère le procédé à l'étape 101.

Si le paramètre représentatif est supérieur au seuil prédéterminé, on affecte une trajectoire circulaire à la trajectoire de commande (étape 108) et on réitère le procédé en retournant à l'étape 101 d'attente de déplacement.

Un tel procédé de commande, dans lequel on compare un paramètre représentatif de l'évolution d'au moins deux angles échantillonnés dθ à un seuil prédéterminé pour attribuer une forme de trajectoire prédéfinie à la trajectoire de commande, permet de commander une multitude de systèmes électroniques et de fonctions par un microcontrôleur de petite capacité et de faible coût.

## Revendications

1. Procédé de commande d'un dispositif de commande à surface tactile comportant une étape de reconnaissance de forme d'une trajectoire de commande sur une surface tactile parmi au moins deux formes de trajectoire prédéfinies, dans laquelle au cours d'une durée prédéterminée (dT):
- on échantillonne la trajectoire de commande pour déterminer un angle échantillonné (dθ) de la trajectoire de commande pour chaque période d'échantillonnage (Te), **caractérisé en ce que**
- on compare un paramètre représentatif de l'évolution d'au moins deux angles échantillonnés (dθ) à un seuil prédéterminé, ledit paramètre représentatif étant la somme des écarts (E) entre les angles échantillonnés (dθ) et une moyenne des angles échantillonnés (Mdθ) et,
- on affecte une forme de trajectoire prédéfinie à la trajectoire de commande en fonction du résultat de la comparaison.

2. Procédé de commande selon la revendication 1, **caractérisé en ce qu'**on affecte une trajectoire circulaire à la trajectoire de commande lorsque ledit paramètre représentatif est supérieur au seuil prédéterminé et ce qu'on affecte une trajectoire rectiligne à la trajectoire de commande lorsque ledit paramètre est inférieur ou égal audit seuil.

3. Procédé de commande selon la revendication 2, **caractérisé en ce que** les trajectoires circulaires ou rectilignes permettent le paramétrage ou la sélection d'une commande.

4. Procédé de commande selon l'une quelconque des revendications précédentes, **caractérisé en ce qu'**au cours de la durée prédéterminée (dT) de l'étape de reconnaissance:
- on détermine en outre une longueur de déplacement de la trajectoire de commande (dR),
- on compare la longueur de déplacement de la trajectoire de commande (dR) à une distance prédéterminée et,
- on affecte une trajectoire stationnaire à la trajectoire de commande si la longueur de déplacement de la trajectoire de commande (dR) est inférieure à la distance prédéterminée.

5. Procédé de commande selon la revendication 4, **caractérisé en ce que** la trajectoire stationnaire permet une validation ou une sélection de fonction.

6. Procédé de commande selon l'une quelconque des revendications précédente, **caractérisé en ce qu'**après la comparaison de l'étape de reconnaissance, on affecte la forme de la trajectoire prédéfinie à la trajectoire de commande si la forme de la trajectoire prédéfinie satisfait à un critère de validation supplémentaire.

7. Procédé de commande selon la revendication 6, **caractérisé en ce que** le critère de validation supplémentaire est satisfait lorsqu'une force d'appui détectée sur la surface tactile (1) est supérieure à une force prédéfinie.

8. Procédé de commande selon l'une quelconque des revendications précédentes, **caractérisé en ce que** la période d'échantillonnage (Te) est variable.

9. Dispositif de commande comportant une surface tactile **caractérisé en ce qu'**il comporte une unité de traitement pour la mise en oeuvre d'un procédé de commande selon l'une quelconque des revendications précédentes.

10. Dispositif de commande selon la revendication 9, **caractérisé en ce qu'**il est apte à commander les fonctions d'au moins un ensemble d'organes électriques ou électroniques d'un véhicule automobile, tel qu'un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairage d'intérieur, des commandes de réglages d'un siège de véhicule automobile.

## Claims

1. Method of controlling a touch-surface control device comprising a step of shape recognition of a control trajectory on a touch surface from among at least two predefined trajectory shapes, in which in the course of a predetermined duration (dT):
- the control trajectory is sampled so as to determine a sampled angle (dθ) of the control trajectory for each sampling period (Te), **characterized in that**
- a parameter representative of the evolution of at least two sampled angles (dθ) is compared with a predetermined threshold, said representative parameter being the sum of the deviations (E) between the sampled angles (dθ) and a mean of the sampled angles (Mdθ), and
- a predefined trajectory shape is assigned to the control trajectory as a function of the result of the comparison.

2. Control method according to Claim 1, **characterized in that** a circular trajectory is assigned to the control trajectory when said representative parameter is greater than the predetermined threshold and **in that** a rectilinear trajectory is assigned to the control trajectory when said parameter is less than or equal to said threshold.

3. Control method according to Claim 2, **characterized in that** the circular or rectilinear trajectories allow the parametrization or the selection of a control.

4. Control method according to any one of the preceding claims, **characterized in that** in the course of the predetermined duration (dT) of the recognition step:
- a length of displacement of the control trajectory (dR) is furthermore determined,
- the length of displacement of the control trajectory (dR) is compared with a predetermined distance and,
- a stationary trajectory is assigned to the control trajectory if the length of displacement of the control trajectory (dR) is less than the predetermined distance.

5. Control method according to Claim 4, **characterized in that** the stationary trajectory allows a validation or a function selection.

6. Control method according to any one of the preceding claims, **characterized in that** after the comparison of the recognition step, the shape of the predefined trajectory is assigned to the control trajectory if the shape of the predefined trajectory satisfies an additional validation criterion.

7. Control method according to Claim 6, **characterized in that** the additional validation criterion is satisfied when a pressing force detected on the touch surface (1) is greater than a predefined force.

8. Control method according to any one of the preceding claims, **characterized in that** the sampling period (Te) is variable.

9. Control device comprising a touch surface **characterized in that** it comprises a processing unit for the implementation of a control method according to any one of the preceding claims.

10. Control device according to Claim 9, **characterized in that** it is able to control the functions of at least one set of electrical or electronic members of a motor vehicle, such as an air-conditioning system, an audio system, a navigation system, a telephone system, motorized window winder controls, controls for adjusting exterior rear-view mirrors, controls for adjusting the position of a sunroof, controls for interior lighting, controls for adjusting a motor vehicle seat.

## Patentansprüche

1. Verfahren zur Steuerung einer Steuervorrichtung mit Berührungsfläche, das einen Schritt der Formerkennung einer Steuerbahn auf einer Berührungsfläche unter mindestens zwei vordefinierten Bahnformen aufweist, bei dem während einer vorbestimmten Dauer (dT):
- die Steuerbahn abgetastet wird, um für jede Tastperiode (Te) einen abgetasteten Winkel (dθ) der Steuerbahn zu bestimmen, **dadurch gekennzeichnet, dass**
- ein für die Entwicklung von mindestens zwei abgetasteten Winkeln (dθ) repräsentativer Parameter mit einer vorbestimmten Schwelle verglichen wird, wobei der repräsentative Parameter die Summe der Abweichungen (E) zwischen den abgetasteten Winkeln (dθ) und eines Mittelwerts der abgetasteten Winkel (Mdθ) ist, und
- der Steuerbahn abhängig vom Ergebnis des Vergleichs eine vordefinierte Bahnform zugeteilt wird.

2. Steuerverfahren nach Anspruch 1, **dadurch gekennzeichnet, dass** der Steuerbahn eine kreisförmige Bahn zugeteilt wird, wenn der repräsentative Parameter größer als die vorbestimmte Schwelle ist, und dass der Steuerbahn einer geradlinige Bahn zugeteilt wird, wenn der Parameter geringer als die oder gleich der Schwelle ist.

3. Steuerverfahren nach Anspruch 2, **dadurch gekennzeichnet, dass** die kreisförmigen oder geradlinigen Bahnen die Parametrierung oder die Auswahl einer Steuerung erlauben.

4. Steuerverfahren nach einem der vorhergehenden Ansprüche, **dadurch gekennzeichnet, dass** während der vorbestimmten Dauer (dT) des Erkennungsschritts:
- außerdem eine Verschiebelänge der Steuerbahn (dR) bestimmt wird,
- die Verschiebelänge der Steuerbahn (dR) mit einer vorbestimmten Strecke verglichen wird, und
- der Steuerbahn eine ortsfeste Bahn zugeteilt wird, wenn die Verschiebelänge der Steuerbahn (dR) geringer als die vorbestimmte Strecke ist.

5. Steuerverfahren nach Anspruch 4, **dadurch gekennzeichnet, dass** die ortsfeste Bahn eine Validierung oder eine Funktionsauswahl erlaubt.

6. Steuerverfahren nach einem der vorhergehenden Ansprüche, **dadurch gekennzeichnet, dass** nach dem Vergleich des Erkennungsschritts der Steuerbahn die Form der vordefinierten Bahn zugeteilt wird, wenn die Form der vordefinierten Bahn ein zusätzliches Validierungskriterium erfüllt.

7. Steuerverfahren nach Anspruch 6, **dadurch gekennzeichnet, dass** das zusätzliche Validierungskriterium erfüllt ist, wenn eine auf der Berührungsfläche (1) erfasste Auflagekraft größer als eine vordefinierte Kraft ist.

8. Steuerverfahren nach einem der vorhergehenden Ansprüche, **dadurch gekennzeichnet, dass** die Abtastperiode (Te) variabel ist.

9. Steuervorrichtung, die eine Berührungsfläche aufweist, **dadurch gekennzeichnet, dass** sie eine Verarbeitungseinheit zur Durchführung eines Steuerverfahrens nach einem der vorhergehenden Ansprüche aufweist.

10. Steuervorrichtung nach Anspruch 9, **dadurch gekennzeichnet, dass** sie die Funktionen mindestens einer Einheit von elektrischen oder elektronischen Organen eines Kraftfahrzeugs steuern kann, wie eine Klimaanlage, ein Audio-System, ein Navigationssystem, ein Telefonie-System, Steuerungen motorisierter Fensterheber, Steuerungen der Einstellungen der Außenrückspiegel, Steuerungen der Positionseinstellungen eines Schiebedachs, Steuerungen der Innenbeleuchtung, Steuerungen von Einstellungen eines Fahrzeugsitzes.
